(19) Europäisches Patentamt
European Patent Office
Office européen des brevets

(11) Publication number: **0 089 163**
**A2**

(12) **EUROPEAN PATENT APPLICATION**

(21) Application number: 83301212.3

(22) Date of filing: 07.03.83

(51) Int. Cl.³: C 13 D 3/02
A 23 L 1/237

(30) Priority: 15.03.82 US 357869

(43) Date of publication of application: 21.09.83 Bulletin 83/38

(84) Designated Contracting States: AT BE CH DE FR GB IT LI LU NL SE

(71) Applicant: UNION SUGAR COMPANY
2820 West Betteravia Road
Santa Maria California 93455(US)

(72) Inventor: Chadwick, Thomas Carl
625 Angela Court
Santa Maria California 93444(US)

(72) Inventor: Voit, David Edward
4447 St. Ives Court
Santa Maria California 93455(US)

(74) Representative: Day, Jeremy John et al,
REDDIE & GROSE 16 Theobalds Road
London, WC1X 8PL(GB)

(54) **Method of reducing the calcium concentration of aqueous solutions.**

(57) A method of reducing the calcium concentration of aqueous solutions which comprises contacting the solution, preferably at an elevated temperature, with magnesium carbonate which preferably has been freshly prepared. The amount of the magnesium carbonate is such as to effect substantial precipitation of the calcium as a calcium containing carbonate. The carbonate can either be left with the solution to stabilize it against pH shifts, for example in the extraction and processing of beet sugar, or can be separated from the solution, as where the presence of the calcium containing solid is objectionable, such as in boiler feed water treatment. The method is also useful in reducing calcium concentrations in sea salt solutions during recovery of table salt, in preventing scaling in boiler water and in the production of products where process conditions are sensitive to calcium levels.

EP 0 089 163 A2

0089163

# METHOD OF REDUCING THE CALCIUM CONCENTRATION OF AQUEOUS SOLUTIONS

During the manufacture of crystalline material such as table salt or sugar from aqueous solutions, the aqueous process flow is subjected to heating for the purpose of concentration and crystallization. When the solutions containing dissolved calcium are heated, the deposition of scales in process lines and equipment and on heat transfer surfaces is a normal occurrence. These scales may take the form of calcium carbonate, calcium oxalate or other insoluble calcium compounds, depending on the system involved. The usual procedure to deal with this scale formation is to take the scaled equipment out of service and subject it to a chemical cleaning with acids, such as muriatic acid or chelating agents such as ethylene-diamine tetraacetic acid and salts thereof, for example, sold under the Trade Mark Versene. After cleaning, the equipment is then put back in service and the service cycle is repeated. Considerable loss of production time thus results.

In the conventional purification of sugar beet juices, lime (CaO) is added to the juice diffused from the beets and is then precipitated with carbon dioxide in the form of calcium carbonate.

The physical and chemical changes and subsequent settling or filtration of the precipitated calcium carbonate remove between 20% and 40% of the impurities present in the juice. This purification step is known as "first carbonation". The amount of carbon dioxide and lime used in this step is selected to achieve an optimal removal of color and impurities and achieve an optimal filterability of the sludge produced. Usual alkalinity ranges for this process are 0.065 to 0.140 %CaO.

First carbonation is followed by second carbonation. The purpose of second carbonation is to minimize the amount of dissolved calcium (lime salts) remaining in the juice. This is done to minimize scaling in equipment and lines in the process, as well as to remove the calcium ion which would otherwise contribute to the formation of molasses. Under certain conditions, such as result from the processing of deteriorated beets, the lime salt content will be excessive and the pH stability of the juice will be poor.

There are many process variations known and practiced for the purification of sugar beet juices that employ lime. These include variations employed in both the first and second carbonation steps.

Some of such process variations are:

a) preliming with carbonation;

b) preliming without carbonation;

c) defeco-carbonation;

d) separation of prelime sludge;

e) separation of precarbonated sludge;

f) recycle of spent lime from first carbonation;

g) intermediate liming;

h) main liming;

i) main carbonation;

j) overcarbonating prior to main liming; and

k) overcarbonating second carbonation, followed by realkalization with MgO.

Lime salts are formed as a result of the chemical composition of the juice being processed and the conditions of operation of second carbonation. The juices derived from sugar beets contain a wide variety of compounds. Among these are organic acids or compounds that break down under the alkaline conditions of the purification process to form organic acids. The lime added to the juice neutralizes these acids. To maintain electroneutrality, the calcium ion enters the solution. Additionally, the calcium ion is present in the solution from the normal aqueous equilibrium of calcium carbonate, carbon dioxide, calcium bicarbonate, calcium ion, bicarbonate ion and the carbonate ion. Calcium may also exist in solution as calcium complexes with chelating agents, such as amino acids and citric acid.

Several methods are employed to reduce the lime salts levels to a minimum. One method is the operation of the second carbonation step at the point of minimum lime salt concentration. Another method is the addition of soda ash to the juice entering the second carbonation zone. The resulting increase in the carbonate ion concentration supresses the lime salts level by the common ion effect. An additional benefit is an enhanced buffer capacity resulting in improved pH stability.

Another method is to overcarbonate in the second carbonation step and subsequently to realkalize with magnesium oxide followed by filtration of the combined solids. In the "Magoxide" process where overcarbonation of second carbonation juice is followed by

realkalization with magnesium oxide, chemical limits are encountered so that effective reduction of calcium concentrations frequently cannot be achieved. The amount of magnesium oxide that can be utilized in the Magoxide method is determined by the levels of carbon dioxide, carbonate ion and bicarbonate ion that can be forced into solution. Frequently, the maximum utilizable magnesium oxide level is low, due to these factors. The Magoxide process is described in detail in United States patents 3,834,941 and 4,045,243 and in an article in the Sugar Journal, November, 1974, pp. 25-29, by Schoenrock et al.

The method of the present invention involves contacting an aqueous solution with a controlled amount of preferably freshly prepared magnesium carbonate to cause the calcium ion in solution to form insoluble calcium containing carbonate by metathesis. The insoluble calcium containing carbonate precipitate then can be removed or can be left in the process liquid to serve as a pH stabilizing means, especially where the process liquid is beet sugar juice or the like liquid.

The described reaction may be represented as follows:

$$Ca^{++} + MgCO_3 \longrightarrow Mg^{++} + CaCO_3$$

or

$$Ca^{++} + 2MgCO_3 \longrightarrow Mg^{++} + CaCO_3 \cdot MgCO_3$$

(dolomite)

The net result is the replacement of dissolved calcium with dissolved magnesium to form a juice having a greatly diminished scaling tendency.

A limitation on the method is its inability to remove

calcium salts when chelating agents are present. If a chelating agent is present in high concentration or the formation constant for its calcium complex is large, the exchange of calcium with magnesium to form a calcium containing carbonate may not occur, since the calcium will remain in solution as a calcium complex. Moreover, some or all of the magnesium carbonate might dissolve if sufficient excess chelant were present. The problem will be most severe in beet sugar juices containing high concentrations of solids and in beet sugar juices of low purity.

The magnesium carbonate used in the present method can be prepared by several routes with equal effectiveness. One route is the reaction between magnesium oxide or hydroxide with carbon dioxide in an aqueous system. Another is the precipitation of magnesium carbonate from soluble magnesium salts, such as those contained in bitterns from solar salt operations or other magnesium brines, and soluble carbonates such as sodium or potassium carbonate. The important factor for high reactivity is the fresh precipitation of magnesium carbonate. Aged precipitate or commercially prepared material can be employed in the present method but it is much less effective.

The present method calls for adding this freshly prepared magnesium carbonate to the liquid to be decalcified. After allowing time for the reaction to occur (which may range from 15 seconds for metathesis in systems with simple salts and no interfering compounds to as much as 30 minutes for complex solutions such as beet sugar juices from deteriorated beets) the reacted calcium containing sludge is usually removed by settling, filtration, wet cyclone or other means.

The technique set forth in this application is superior to

other techniques utilizing magnesium oxide for lime salts control. In contrast to the Magoxide method, the present method when applied to beet sugar juice uses juice initially at as low a lime salts level as possible. Moreover, the amount of magnesium carbonate to be added in the present method is not limited by solubility considerations and thus the range of applicability of the method is greatly extended. In addition, the reaction proceeds in one step with magnesium carbonate. The reaction can be allowed to occur in a variety of ways in sugar juice. The preferred magnesium carbonate is freshly prepared as outlined above.

ALTERNATIVE 1

The magnesium carbonate can be added to a filtered second carbonation sugar juice. Second carbonation is controlled to achieve a practical minimum lime salts level. Carbon dioxide is added in second carbonation to obtain an alkalinity of preferably 0 to 0.030% CaO. The optimum alkalinity depends on the nature of the impurities present in the juice. The juice is allowed to contact the magnesium carbonate by some means for a period of time ranging from 15 seconds to 30 minutes to allow the reaction to occur. Different applicable techniques are as follows:

a) the magnesium carbonate may be mixed with the juice and allowed to react in a vessel with a residence time of between 5 and 15 minutes. The reacted sludge may be returned if desired to obtain a more complete reaction and more economical use of the magnesium carbonate;

b) magnesium carbonate may be mixed with the juice and filtered on conventional thin juice filters where the filter cake will provide the needed reaction time; and

c) the magnesium carbonate may be mixed with the juice and separated in a clarifier where the desired residence time for the reaction to occur is allowed in the clarifier.

ALTERNATIVE 2

The magnesium carbonate can be added to the second carbonation overflow, either with or without overcarbonation but preferably without overcarbonation. The solid magnesium carbonate is kept in contact with the sugar juice the required amount of time by being held in the filter cake of the second carbonation filters.

ALTERNATIVE 3

The magnesium carbonate can be added to thin juice just prior to evaporation, with the magnesium carbonate solids being allowed to enter the evaporator system. The reaction is allowed to occur in the evaporator bodies and the resulting calcium carbonate-containing sludge is carried through to standard liquor filtration, where removal is effected.

ALTERNATIVE 4

The magnesium carbonate can be added to thick sugar juice entering the sugar end. The magnesium carbonate is retained on the standard liquor filters where adequate contact time is allowed for the reaction to occur. The thick juice may be either fresh production or thick juice from storage.

ALTERNATIVE 5

The magnesium carbonate may be added to any of a variety of flows in the sugar end such as white machine syrup or intermediate

machine syrup. It need not be removed from the juice flow and may be allowed to exit the factory in the molasses. The required contact time for the reaction to occur is obtained in the normal process equipment used for syrup storage and crystallization.

It will be noted that in treatment of sugar juice, the present method is used after carbonation, in contrast to certain conventional techniques. The primary benefits derived from the application of this method are:

a) an improved pH stability of beet sugar and similar juices being processed, resulting in lowered losses due to inversion of the sugar, and thereby providing an increased extraction of beet sugar and the like;

b) a reduced or eliminated tendency of the process liquid to scale factory equipment and lines, resulting in improved filter life, reduced pumping problems and better heat transfer, as well as less down time;

c) the replacement of the more melassigenic calcium ion with the less melassigenic magnesium ion, thereby increasing extraction;

d) increased product quality; and

e) the elimination of a need to add buffering chemicals such as soda ash to the beet sugar production process, thereby reducing molasses production and increasing extraction of beet sugar. The method has applicability in other industrial and water treatment processes, as previously described. Some of the processes where a desirable lime salts reduction can be achieved are:

## Salt Manufacturing

In the production of granular table salt from sea salt, the initially crystallized salt is dissolved, clarified and recrystallized. The recrystallization step results in calcium scaling problems in filters used to dewater the salt, as well as in the heat transfer equipment. Magnesium carbonate may be prepared from bitterns or other naturally occurring magnesium brines or from magnesium oxide and added prior to or during the clarification step to remove calcium from the solution.

## Water Treatment

In the utilization of water for a wide variety of uses, pretreatment for the removal of calcium is frequently required. Examples of this type of situation are boiler feed water where calcium scale presents heat transfer problems, enzymatically or otherwise catalyzed systems where the catalyst is sensitive to calcium levels, and ion exchange systems where calcium can foul the resin. The addition of magnesium carbonate to the water, followed by adequate reaction time and clarification, results in a reduced calcium level, thereby reducing or eliminating treatment requirements otherwise needed.

As will be more apparent from the specific examples set forth below, the desired metathesis reaction to produce insoluble calcium containing carbonate frequently can be accelerated and increased in effect by elevating the temperature of the reaction solution. Any suitable temperature can be employed, for example: temperatures such as about 95°C, close to the boiling point of the solution. However, the present method can also be successfully performed at ambient temperature.

The amount of magnesium carbonate employed in the present

method will vary, depending on the concentration of dissolved calcium in the solution when treated, the presence of other dissolved and/or suspended materials, etc. The following specific examples V through VIII illustrate various magnesium carbonate concentrations used successfully in the present method. Examples I through IV illustrate suitable techniques for the generation of fresh magnesium carbonate particularly useful in the present method.

EXAMPLE I

Preparation of magnesium carbonate by the carbonation of magnesium oxide with carbon dioxide

Fifty pounds of MgO were mixed with 30 gallons of water in a suitable container. The resulting slurry was agitated with an electric agitator. Carbon dioxide was then introduced at the bottom of the container through a cross fabricated from 1" pipe with 1/16" holes drilled therein on 1" centers. The carbon dioxide gas was approximately 30% by volume $CO_2$ and was the combustion gas from a factory lime kiln, compressed to 8 psig. The gas was introduced into the slurry for four hours with vigorous agitation and the finished slurry was found to be suitable for use in the present method.

EXAMPLE II

Preparation of magnesium carbonate by the chemical precipitation of magnesium carbonate from soluble salts

A solution of magnesium chloride was made by dissolving 50.83 gm of $MgCl_2 .6 H_2O$ in water to a volume of 0.5 liters. To the solution was added an aqueous solution containing 26.50 gm $Na_2CO_3$ in 0.5 liters. The resulting precipitated solid was collected in a Buchner funnel and used without drying. The material was found to be suitable for use in the present method.

## EXAMPLE III

### Preparation of magnesium carbonate on a continuous basis for factory scale processing

Three vessels of approximately 70 gallons capacity each are connected together in series with short lengths of 3" pipe. Each vessel is fitted with an agitator and a gas distribution header. The gas distribution header is a cross fabricated from 1" pipe drilled with 1/16" holes on 1" centers and fitted to the bottom of the tank. One arm of the cross is brought out to a carbon dioxide supply line. Water or thin aqueous process juice, such as is obtained in beet sugar extraction, is fed into the first vessel at a flow rate of one to five gallons per minute, while magnesium oxide is fed into that vessel at a rate needed to give the desired lime salts reduction, usually, in the case of beet sugar extraction, in the range of .1 to 1.0 lbs. MgO per ton of beets sliced. The overflow from the last reactor contains the active magnesium carbonate in the slurry and may be introduced into the desired juice stream in accordance with the present method.

## EXAMPLE IV

### Preparation of magnesium carbonate from bitterns

An aqueous solution of bitterns from a solar salt operation was prepared by diluting 159.84 gm of bitterns to a total volume of 500 ml with water. To this solution was added an aqueous solution of 26.50 gm $Na_2CO_3$ in 0.5 liters of water. The resulting solid was collected in a Buchner funnel, washed and found to be suitable for use in the present method.

EXAMPLE V

Treatment of a simple aqueous solution with freshly precipitated magnesium carbonate

Two aqueous solutions, each containing 207 mg/liter of dissolved calcium, were treated--in each instance by the addition of approximately 1/2 tsp. of magnesium carbonate. In the one case the magnesium carbonate had been freshly precipitated from magnesium chloride. In the other case the magnesium carbonate had been freshly precipitated from bitterns. Both solutions were then heated to a boil for 15 minutes. Both solutions were then filtered and the clear liquids analyzed for calcium content. The calcium content was found to be 33 mg/liter in each instance, showing a large reduction from initial calcium concentration, thus proving the suitability of the present method.

EXAMPLE VI

Treatment of thin juice with commercial magnesium carbonate.

A 500 cc. sample of thin juice from a beet sugar extraction process was heated to 95°C to 100°C. A 10.5 gm quantity of commercially prepared magnesium carbonate was added to the sample and the temperature of the resulting mixture was maintained at 95-100°C for 15 minutes. The sample was then filtered and the filtrate was analyzed for calcium content. The calcium level of the filtrate was found to have been lowered from a starting level of 58.4 mg/liter to a level of 49.4 mg/liter.

EXAMPLE VII

Treatment of thin juice with freshly precipitated magnesium carbonate.

A 500 cc. sample of hot thin juice from a beet sugar extraction process was heated to 95°C to 100°C. A 5 gm sample of

magnesium oxide in water was carbonated with pure $CO_2$ until the resulting slurry reached a pH of 8.3. The solids from the slurry containing freshly precipitated magnesium carbonate were then introduced into the hot, thin juice and maintained at 100°C for 15 minutes. The juice was then filtered and the filtrate was analyzed for calcium content. The calcium level was found to have been lowered from a starting level of 58.4 mg/liter to 23.9 mg/liter, representing a substantial improvement over the results obtained when commercially prepared magnesium carbonate was used for the calcium lowering (Example VI).

## EXAMPLE VIII

### Treatment of thick juice with magnesium carbonate

Daily composite samples of thick juice from a beet sugar extraction process were mixed together and a 300 cc. sample of the resulting combined composite (solids content approximately 71%) having a calcium content of 85.0 mg/liter was heated to 95°C. A 5 gm sample of magnesium carbonate, which had been freshly prepared from magnesium chloride and sodium carbonate as per Example II, was added with stirring to the thick juice composite and the resulting solution was heated at 95°C for 20 minutes and then filtered. The filtrate (filtrate A) was analyzed for calcium content. An identical sample of thick composite juice was similarly treated with magnesium carbonate made from bitterns and sodium carbonate, as per Example IV, to provide filtrate B. The residual calcium concentrations were 77.6 mg/liter and 79.8 mg/liter for filtrates A and B, respectively, showing a substantial reduction in calcium concentration.

Specific Examples V through VIII clearly illustrate that the present method results in the substantial reduction of the

concentration of dissolved calcium in aqueous solutions including calcium containing water (such as that which must be decalcified before use in boilers and calcium-sensitive catalytic processes), as well as in juices present during the production of beet sugar and bitterns present during the production of table salt. The method is simple, rapid, inexpensive and effective. It can be used at various liquid processing stages with equal effectiveness. The method has the added benefit in sugar juice processing of stabilizing the pH of the juice and promoting increased sugar yields.

CLAIMS

1. A method of reducing the calcium concentration in calcium containing aqueous solutions, which method comprises the steps of contracting a dissolved calcium containing aqueous solution with magnesium carbonate in an amount sufficient to react with a substantial portion of the calcium; and maintaining such contact until a substantial amount of the calcium precipitates from the solution as calcium carbonate.

2. A method according to claim 1, wherein the magnesium carbonate is freshly prepared magnesium carbonate.

3. A method according to claim 1 or claim 2, wherein the calcium containing aqueous solution comprises juice from the extraction and processing of sugar from vegetable matter.

4. A method according to claim 3, wherein the vegetable matter comprises sugar beets.

5. A method according to claim 3 or claim 4, wherein the juice is that obtained from a processing stage subsequent to the first carbonation stage of beet sugar extraction.

6. A method according to claim 3 or claim 4, wherein the juice is thick juice entering the sugar end.

7. A method according to any one of claims 3 to 6, therein the contacting is effected while the juice is at elevated temperature.

8. A method according to claim 1, wherein the calcium containing aqueous solution comprises salt solution from the solar evaporation of salt water in the manufacture of table salt.

9. A method according to claim 1, wherein the calcium containing aqueous solution is selected from the group consisting of boiler feed water, water utilized in calcium-sensitive catalyzed systems, and ion exchange systems.

10. A method according to any one of claims 1 to 9, wherein the solution is free from a concentration of chelating agent which would substantially interfere with formation and/or precipitation of calcium carbonate.